# EUROPEAN PATENT SPECIFICATION

(11) **EP 1 169 912 B1**
(45) Date of publication and mention of the grant of the patent: **28.07.2004**
(21) Application number: 01201619.2
(22) Date of filing: 04.05.2001
(51) Int. Cl.: A01J 5/017

(54) **An implement for milking animals**
Vorrichrung zum Melken von Tieren
Dispositif pour la traite d'animaux

(30) Priority: 26.06.2000 NL 1015525
(43) Date of publication of application: 09.01.2002
(73) Proprietor: Lely Enterprises AG, 6300 ZUG (CH)
(72) Inventor: Deelstra, Jentje, 2284 AA Rijswijk (NL)
(74) Representative: Corten, Maurice Jean F.M.

(56) References cited:
- NL-C- 1 004 196
- US-A- 4 190 020

## Description

The present invention relates to an implement for milking animals, as described in the preamble of claim 1.

Such an implement is known from Dutch patent 1004196.

Upon milking animals in such an implement it is of importance that the foremilk is automatically separated from the further milk, as the foremilk is usually somewhat infected and/or of an other quality. According to the invention, this is achieved by the measures described in the characterizing part of claim 1. The implement according to the invention has the advantage that mixing of the foremilk collected with the milk that is led to the milk container means is prevented or at least minimized to a considerable extent. When the foremilk from each of the udder quarters has to be collected, while the milk flow from the individual udder quarters does not start simultaneously, e.g. because the teat cups are attached consecutively to the teats, it is of importance that there is provided an auxiliary reservoir in each of the milk lines between a teat cup and the milk container means. For the purpose of adequately separating the foremilk from the milk obtained thereafter, the content of the auxiliary reservoir will have to be larger than the to be expected quantity of foremilk. Preferably the content of the auxiliary reservoir is approximately two to three times as large as the to be expected quantity of foremilk.

In a particular embodiment, only at the beginning of the milking process the auxiliary reservoir is in open connection with the relevant milk line between a teat cup and the milk container means. As a result thereof the first milk obtained will automatically fill the auxiliary reservoir and, when the latter is completely filled, the subsequent milk flow will be led to the milk container means. In a concrete embodiment, in the relevant milk line there is included a connecting element to which the interrupted ends of the milk line are connected, the lower side of said connecting element being provided with an aperture to which the auxiliary reservoir is connected. In order to prevent foremilk from flowing beyond said aperture to the milk container means, the two ends of the milk line are connected to the connecting element in a substantially horizontal plane, in a staggered position opposite each other. In this way the connecting element forms a resistance ensuring that the first milk, so including the foremilk, arrives in the auxiliary reservoir and, only when the latter is completely filled, the milk obtained thereafter can flow to the milk container means.

For the purpose of discharging the milk collected in the auxiliary reservoir, according to the invention the shutting off means comprise an outlet valve that shuts off the auxiliary reservoir by means of the vacuum present in the milk line. Said outlet valve releases the outflow opening of the auxiliary reservoir when after milking the teat cup comes in open connection with the outside air, or when the teat cup is included in a rinsing line system for only cleaning the teat cup or when the teat cup is included in a rinsing line system and rinsing of the teat cup and the milk line system connected thereto is ended. In other words, as soon as an animal has been milked out and a relevant teat cup is detached, the vacuum in said teat cup and the milk line connected thereto is removed and the outlet valve of the relevant auxiliary reservoir is released, so that the milk present in the auxiliary reservoir can flow away. However, also when the teat cups and, if desired, the milk line system have to be cleaned and a rinsing liquid is brought into the teat cup and the milk line connected thereto in the usual way by means of a rinsing member that is attached to a teat cup, because of the fact that the auxiliary reservoir is then being filled with rinsing liquid, said rinsing liquid will have to be discharged, i.e. as soon as the teat cup is detached from the rinsing member. According to a further inventive feature, the outlet valve is constituted by a first ball. Such an outlet valve has the advantage of being less sensitive to contamination. According to another inventive feature, the further shutting off means of the inlet opening of the auxiliary reservoir comprise an inlet valve which is designed as a float. When the auxiliary reservoir is filled with the foremilk, the float continues to float on the milk and shuts off the inlet opening when the auxiliary reservoir is completely filled with foremilk. In a preferred embodiment of the invention the float is also designed as a ball. To facilitate mounting of the balls in the foremilking implement the diameter of the first ball is smaller than the diameter of the second ball. In a preferred embodiment of the invention the balls are made from synthetic material or rubber. According to again another embodiment of the invention, the shutting off means of the inlet opening of the auxiliary reservoir comprise an inlet valve which is designed as a controllable shut-off valve. According to a further inventive feature, the controllable shut-off valve is suitable for operating under the control of a milk level sensor, such as e.g. a milk conductivity sensor or an optical or an acoustic sensor. According to a further inventive feature, the sensor is disposed in the auxiliary reservoir. According to again another aspect of the invention, the outlet valve of the shutting off means of the outlet opening of the auxiliary reservoir is designed as a further controllable shut-off valve. According to a further inventive feature, the further controllable shut-off valve is computer-controlled. To prevent the milk streaming out of the auxiliary reservoir from constantly arriving on the ground and flowing away, the auxiliary reservoir has an outflow opening that debouches into a collecting element. In other words, the milk, and in particular the foremilk, is collected in a special collecting element. The (fore)milk collected herein after one or more milkings may be further utilized; this also holds for the rinsing liquid collected in the auxiliary reservoir, in particular when it does not contain chemical components that are harmful to the animals, but substantially only consists of water with milk residues that may be present therein. For that purpose, according to the invention, the foremilk separated by means of the auxiliary reservoir and/or, when the relevant teat cup would be included in a rinsing line system, the rinsing fluid discharged via the auxiliary reservoir are/is conveyed to an implement for supplying fodder and/or drink to an animal. In this manner, neither the milk collected in the auxiliary reservoir, in particular the foremilk, nor - as far as water has been used as a rinsing liquid - the water with milk residues that may be present therein which flows out of the auxiliary reservoir, needs to be wasted.

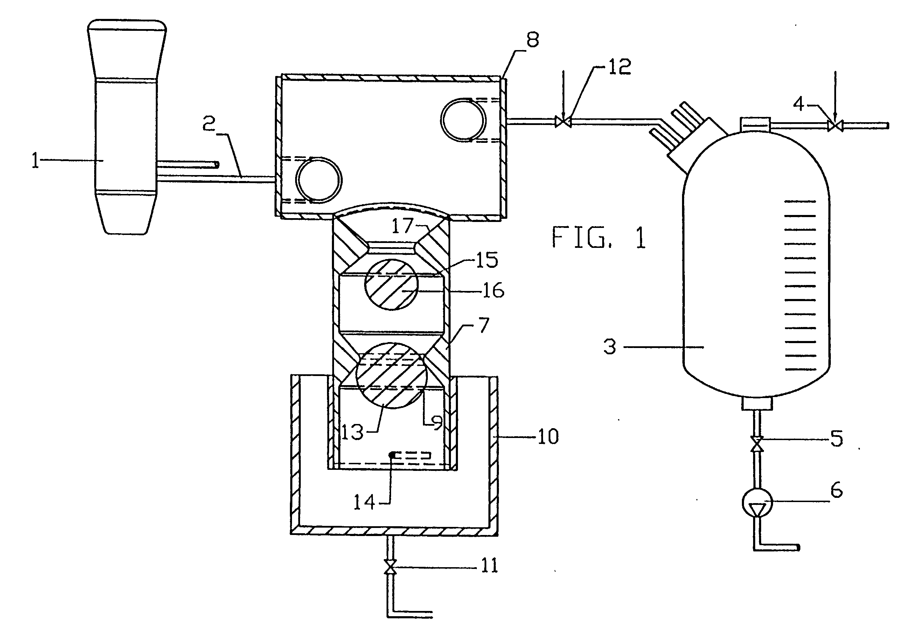

The invention will now be explained in further detail with reference to the accompanying drawing in which
Figure 1 shows schematically the milk line system between a milk glass and the milk container means.

Of the teat cups to be attached automatically to the teats of an animal to be milked by means of a (non-shown) milking robot, only one teat cup 1 is shown in Figure 1. Like the other teat cups, said teat cup 1 is connected to milk collecting means 3 via a milk line 2. In the embodiment shown in this figure the milk collecting means are constituted by a milk glass. Into said milk glass 3 debouch the four milk lines 2 coming from the teat cups, while the milk glass is further connected via a valve 4 to the vacuum system of the milking implement. Via a valve 5 and by means of a pump 6, the milk is discharged from the milk glass 3 to a (non-shown) milk tank. In each of the milk lines 2 there is included an auxiliary reservoir 7. In Figure 1 said provision is only depicted for one milk line. The content of the auxiliary reservoir is larger than the to be expected quantity of foremilk which is obtained via the relevant teat cup 1 at the beginning of the milking process. Preferably the content of the auxiliary reservoir is approximately two to three times as large as the to be expected quantity of foremilk. Via a connecting element 8 the auxiliary reservoir 7 is in open connection with the relevant milk line 2. The connecting element 8 is constituted by a space to which the interrupted ends of a milk line 2 are connected. In the bottom of said space there is provided an aperture which is in direct connection with the auxiliary reservoir 7. As shown in Figure 2, the two ends of the milk line 2 are connected to the connecting element 8 in a substantially horizontal plane, in a staggered position opposite each other. Between the connecting element 8 and the milk glass 3 there is disposed a valve 12.

The auxiliary reservoir 7 is provided with an outlet valve 9, constituted by shutting off means, which is designed as a first ball that shuts off the auxiliary reservoir 7 by means of the vacuum present in a milk line 2. When the valve 12 is shut off and the vacuum in the milk line 2 is removed, then the auxiliary reservoir 7 is no longer shut off by the outlet valve 9. To prevent the first ball 13 from falling out of the outlet opening of the auxiliary reservoir 7, the outlet opening is blocked by means of a pin 14. Because of the pressure of the (fore)milk present in the auxiliary reservoir 7 the outlet valve 9 can easily give way and the (fore)milk flows into a collecting element 10. The (fore)milk collected in the collecting element 10 can be discharged via the valve 11 and a (non-shown) pump, in particular to an implement for supplying fodder and/or drink to an animal.

The milk obtained by means of the teat cups will not flow directly to the milk collecting means 3 because of the presence of the connecting element 8 in the milk line 2 and the aperture provided at the lower side thereof, said aperture being in connection with the auxiliary reservoir 7, as a result of the fact that the connecting element forms a resistance to the milk flow. Said resistance is realized by the staggered interruption, located in a substantially horizontal plane, in the milk line 2. Therefore, the first milk obtained will fill in the first instance the auxiliary reservoir 7 via the inlet opening at the lower side of the connecting element. In the auxiliary reservoir 7 there are provided further shutting off means 15 that shut off the auxiliary reservoir as soon as the latter is filled with the foremilk. The further shutting off means 15 comprise a float which is designed as a second ball 16 in the present embodiment. After the auxiliary reservoir 7 has been filled, the second ball 16 comes against a seat 17 so that the auxiliary reservoir 7 is shut off and the subsequent milk flow will stream via the connecting element 8 to the milk glass 3. It has appeared in practice that the milk streaming from the teat cup 2 to the milk glass 3 does hardly mix, if at all, with the foremilk which is present in the lower part of the auxiliary reservoir.

When only the teat cups have to be cleaned, the teat cups are attached in the usual manner to rinsing members, with the aid of which a rinsing liquid is led into the teat cups and, if desired, also beyond the edge thereof. By closing the valve 12 provided behind the connecting element 8, said rinsing liquid can directly be discharged via the auxiliary reservoir 7; in that situation the valve 11 will in principle be opened. In this manner a very short discharge of rinsing liquid is possible, so that the teat cups can be cleaned easily, i.e. after each milking of an animal. In the same way drying air can be pressed through the teat cups and escape via the auxiliary reservoir 7. When the teat cups and also the milk line system have to be cleaned, the teat cups are again attached in the usual manner to rinsing members and are now also included in a rinsing line system. The rinsing liquid, like the (fore)milk, will fill in the first instance the auxiliary reservoir 7, and be led subsequently via the valve 12 further to the milk glass 3 and be discharged via the valve 5 and the pump 6. In this manner the teat cups and the lines connected thereto, the milk glass 3 included, are rinsed. When cleaning of the teat cups and the milk line system has been ended, rinsing liquid will remain in the auxiliary reservoir 7. When the rinsing members are detached from the teat cups and the teat cups are consequently again in open connection with the outside air, so that the vacuum is removed from the milk line 2, in the same manner as described in the foregoing for the (fore)milk present in the auxiliary reservoir, the rinsing liquid will arrive via the outlet valve 9 in the collecting element 10, while it can be discharged via the valve 11. In that situation the valve 12 is closed. When it has been ensured that the rinsing liquid does not contain chemical components that are harmful to the animals, and thus only consists of water with milk residues that may be present therein, the rinsing liquid collected in the collecting element 10 can also be conveyed as drinking-water to the implement for supplying fodder and/or drink to the animals.

## Claims

1. An implement for milking animals, such as cows, provided with a milking parlour with a milking robot for automatically attaching teat cups (1) to the teats of an animal to be milked, said implement further being provided with milk container means for the milk obtained, while in at least one milk line (2) between the teat cups (1) and the milk container means there is provided an auxiliary reservoir (7) in which a certain quantity of milk, substantially obtained at the beginning of the milking process, is collected via an inlet opening and can leave said auxiliary reservoir (7) via an outlet opening with shutting off means (9), while the milk obtained thereafter is substantially led to the milk container means, **characterized in that** the inlet opening is provided with further shutting off means (13) for preventing the milk collected in the auxiliary reservoir (7) from being discharged to the milk container means.

2. An implement as claimed in claim 1, **characterized in that** there is provided an auxiliary reservoir (7) in each of the milk lines (2) between a teat cup and the milk container means.

3. An implement as claimed in claim 1 or 2, **characterized in that** the content of the auxiliary reservoir (7) is larger than the to be expected quantity of foremilk.

4. An implement as claimed in claim 3, **characterized in that** the content of the auxiliary reservoir (7) is approximately two to three times as large as the to be expected quantity of foremilk.

5. An implement as claimed in any one of the preceding claims, **characterized in that** only at the beginning of the milking process the auxiliary reservoir (7) is in open connection with the relevant milk line (2) between a teat cup (1) and the milk container means.

6. An implement as claimed in claim 5, **characterized in that** in the relevant milk line (2) there is included a connecting element (8) to which the interrupted ends of the milk line (2) are connected, the lower side of said connecting element (8) being provided with an aperture to which the auxiliary reservoir (7) is connected.

7. An implement as claimed in claim 6, **characterized in that** the two ends of the milk lines (2) are connected to the connecting element (8) in a substantially horizontal plane, in a staggered position opposite each other.

8. An implement as claimed in any one of the preceding claims, **characterized in that** the shutting off means (9) comprise an outlet valve (12) that shuts off the auxiliary reservoir (7) by means of the vacuum present in the milk line (2).

9. An implement as claimed in claim 8, **characterized in that** the outlet valve (12) releases the outflow opening of the auxiliary reservoir (7) when after milking the teat cup (1) comes in open connection with the outside air, or when the teat cup (1) is included in a rinsing line system for only cleaning the teat cup (1) or when the teat cup (1) is included in a rinsing line system and rinsing of the teat cup (1) and the milk line system connected thereto is ended.

10. An implement as claimed in claim 8 or 9, **characterized in that** the outlet valve (12) is constituted by a first ball (13).

11. An implement as claimed in any one of the preceding claims, **characterized in that** the further shutting off means (15) of the inlet opening of the auxiliary reservoir (7) comprise an inlet valve (16) which is designed as a float.

12. An implement as claimed in claim 11, **characterized in that** the float is designed as a second ball (16).

13. An implement as claimed in any one of claims 10 to 12, **characterized in that** the diameter of the first ball (13) is smaller than the diameter of the second ball (16).

14. An implement as claimed in any one of claims 10 to 13, **characterized in that** the balls (13; 16) are made from synthetic material or rubber.

15. An implement as claimed in any one of claims 1 to 10, **characterized in that** the further shutting off means (15) of the inlet opening of the auxiliary reservoir (7) comprise an inlet valve which is designed as a controllable shut-off valve.

16. An implement as claimed in claim 15, **characterized in that** the controllable shut-off valve is suitable for operating under the control of a milk level sensor, such as e.g. a milk conductivity sensor or an optical or an acoustic sensor.

17. An implement as claimed in claim 16, **characterized in that** the sensor is disposed in the auxiliary reservoir.

18. An implement as claimed in any one of claims 1 to 9 or 11 to 17, **characterized in that** the outlet valve of the shutting off means (9) of the inlet opening of the auxiliary reservoir (7) is designed as a further controllable shut-off valve.

19. An implement as claimed in claim 18, **characterized in that** the further controllable shut-off valve is computer-controlled.

20. An implement as claimed in any one of the preceding claims, **characterized in that** the auxiliary reservoir (7) has an outflow opening that debouches into a collecting element (10).

21. An implement as claimed in claim 20, **characterized in that** the foremilk separated by means of the auxiliary reservoir (7) and/or, when the relevant teat cup (1) would be included in a rinsing line system, the rinsing liquid discharged via the auxiliary reservoir (7) can be conveyed to an implement for supplying fodder and/or drink to an animal.

## Patentansprüche

1. Vorrichtung zum Melken von Tieren, wie z. B. Kühen, die einen Melkstand mit einem Melkroboter zum automatischen Anschließen von Zitzenbechern (1) an die Zitzen eines zu melkenden Tieres aufweist, wobei die Vorrichtung ferner mit einem Milchbehälter für die gewonnene Milch versehen ist, wobei in mindestens einer Milchleitung (2) zwischen den Zitzenbechern (1) und dem Milchbehälter ein Zusatzbehälter (7) vorgesehen ist, in welchem eine bestimmte Milchmenge, die im wesentlichen zu Beginn des Melkvorganges gewonnen wurde, über eine Eintrittsöffnung eintritt und den Zusatzbehälter (7) über eine Austrittsöffnung mit einer Absperrvorrichtung (9) verlassen kann, wobei die danach gewonnene Milch im wesentlichen zum Milchbehälter geleitet wird,
**dadurch gekennzeichnet, daß** die Einlaßöffnung mit einer weiteren Absperrvorrichtung (13) versehen ist, um zu verhindern, daß die im Zusatzbehälter (7) gesammelte Milch in den Milchbehälter abgeleitet wird.

2. Vorrichtung nach Anspruch 1,
**dadurch gekennzeichnet, daß** in jeder der Milchleitungen (2) zwischen einem Zitzenbecher und dem Milchbehälter ein Zusatzbehälter (7) angeordnet ist.

3. Vorrichtung nach Anspruch 1 oder 2,
**dadurch gekennzeichnet, daß** das Fassungsvermögen des Zusatzbehälters (7) größer ist als die voraussichtliche Menge an Vorgemelk.

4. Vorrichtung nach Anspruch 3,
**dadurch gekennzeichnet, daß** das Fassungsvermögen des Zusatzbehälters (7) etwa zwei- bis dreimal so groß ist wie die voraussichtliche Menge an Vorgemelk.

5. Vorrichtung nach einem der vorhergehenden Ansprüche,
**dadurch gekennzeichnet, daß** der Zusatzbehälter (7) nur zu Beginn des Melkvorganges in offener Verbindung mit der entsprechenden Milchleitung (2) zwischen einem Zitzenbecher (1) und dem Milchbehälter steht.

6. Vorrichtung nach Anspruch 5,
**dadurch gekennzeichnet, daß** in der entsprechenden Milchleitung (2) ein Verbindungselement (8) angeordnet ist, an welches die unterbrochenen Enden der Milchleitung (2) angeschlossen sind, wobei die Unterseite des Verbindungselements (8) mit einer Öffnung versehen ist, an die der Zusatzbehälter (7) angeschlossen ist.

7. Vorrichtung nach Anspruch 6,
**dadurch gekennzeichnet, daß** die beiden Enden der Milchleitungen (2) in einer im wesentlichen horizontalen Ebene versetzt zueinander an das Verbindungselement (8) angeschlossen sind.

8. Vorrichtung nach einem der vorhergehenden Ansprüche,
**dadurch gekennzeichnet, daß** die Absperrvorrichtung (9) ein Auslaßventil (12) umfaßt, das den Zusatzbehälter (7) mit Hilfe des in der Milchleitung (2) vorhandenen Vakuums verschließt.

9. Vorrichtung nach Anspruch 8,
**dadurch gekennzeichnet, daß** das Auslaßventil (12) die Auslaßöffnung des Zusatzbehälters (7) freigibt, wenn der Zitzenbecher (1) nach dem Melken in offene Verbindung mit der Außenluft tritt, oder wenn der Zitzenbecher (1) in einem Spülleitungssystem angeordnet ist, das nur zum Reinigen des Zitzenbechers (1) dient, oder wenn der Zitzenbecher (1) in einem Spülleitungssystem angeordnet ist und das Spülen des Zitzenbechers (1) und des daran angeschlossenen Milchleitungssystems beendet ist.

10. Vorrichtung nach Anspruch 8 oder 9,
**dadurch gekennzeichnet, daß** das Auslaßventil (12) durch eine erste Kugel (13) gebildet ist.

11. Vorrichtung nach einem der vorhergehenden Ansprüche,
**dadurch gekennzeichnet, daß** die weitere Absperrvorrichtung (15) der Einlaßöffnung des Zusatzbehälters (7) ein Einlaßventil (16) umfaßt, das als Schwimmer ausgeführt ist.

12. Vorrichtung nach Anspruch 11,
**dadurch gekennzeichnet, daß** der Schwimmer als zweite Kugel (16) ausgeführt ist.

13. Vorrichtung nach einem der Ansprüche 10 bis 12,
**dadurch gekennzeichnet, daß** der Durchmesser der ersten Kugel (13) kleiner ist als der Durchmesser der zweiten Kugel (16).

14. Vorrichtung nach einem der Ansprüche 10 bis 13,
**dadurch gekennzeichnet, daß** die Kugeln (13; 16) aus Kunststoff oder Gummi hergestellt sind.

15. Vorrichtung nach einem der Ansprüche 1 bis 10,
**dadurch gekennzeichnet, daß** die weitere Absperrvorrichtung (15) der Eintrittsöffnung des Zusatzbehälters (7) ein Einlaßventil umfaßt, das als steuerbares Absperrventil ausgeführt ist.

16. Vorrichtung nach Anspruch 15,
**dadurch gekennzeichnet, daß** das steuerbare Absperrventil geeignet ist, unter Steuerung durch einen Milchpegelsensor, wie z. B. einem Milchleitfähigkeitssensor oder einem optischen oder einem akustischen Sensor, zu arbeiten.

17. Vorrichtung nach Anspruch 16,
**dadurch gekennzeichnet, daß** der Sensor in dem Zusatzbehälter angeordnet ist.

18. Vorrichtung nach einem der Ansprüche 1 bis 9 oder 11 bis 17,
**dadurch gekennzeichnet, daß** das Auslaßventil der Absperrvorrichtung (9) der Auslaßöffnung des Zusatzbehälters (7) als weiteres steuerbares Absperrventil ausgeführt ist.

19. Vorrichtung nach Anspruch 18,
**dadurch gekennzeichnet, daß** das weitere steuerbare Absperrventil computergesteuert ist.

20. Vorrichtung nach einem der vorhergehenden Ansprüche,
**dadurch gekennzeichnet, daß** der Zusatzbehälter (7) eine Auslaßöffnung aufweist, die in ein Aufnahmeelement (10). mündet.

21. Vorrichtung nach Anspruch 20,
**dadurch gekennzeichnet, daß** das mit Hilfe des Zusatzbehälters (7) abgesonderte Vorgemelk und/oder, wenn der entsprechende Zitzenbecher (1) in einem Spülleitungssystem angeordnet ist, die über den Zusatzbehälter (7) abgeleitete Spülflüssigkeit zu einer Vorrichtung zum Zuführen von Futter und/oder Trinkflüssigkeit zu einem Tier geleitet werden kann.

## Revendications

1. Dispositif pour la traite d'animaux, comme des vaches, pourvu d'une salle de traite avec une trayeuse pour attacher automatiquement des gobelets trayeurs (1) aux trayons d'un animal devant être trait, ledit dispositif étant en outre pourvu de moyens de citernes de lait pour le lait obtenu, tandis que dans au moins un lactoduc (2), entre les gobelets trayeurs (1) et les moyens de citernes à lait, un réservoir auxiliaire (7) est prévu dans lequel une certaine quantité de lait, essentiellement obtenue au début du processus de traite, est recueillie via une ouverture d'entrée possédant des moyens de fermeture (9), tandis que le lait obtenu par la suite est essentiellement conduit aux moyens de citernes de lait, **caractérisé en ce que** l'ouverture d'entrée est pourvue de moyens de fermeture supplémentaires (13) pour empêcher que le lait recueilli dans le réservoir auxiliaire (7) ne soit déchargé vers les moyens de citernes de lait.

2. Dispositif selon la revendication 1, **caractérisé en ce qu'**un réservoir auxiliaire (7) est prévu pour chacun des lactoducs (2) entre un gobelet trayeur et les moyens de citernes à lait.

3. Dispositif selon la revendication 1 ou 2, **caractérisé en ce que** le contenu du réservoir auxiliaire (7) est supérieur à la quantité de premier lait prévue.

4. Dispositif selon la revendication 3, **caractérisé en ce que** le contenu du réservoir auxiliaire (7) est approximativement deux ou trois fois supérieur à la quantité de premier lait prévue.

5. Dispositif selon l'une quelconque des revendications précédentes, **caractérisé en ce que** seulement au début du processus de traite, le réservoir auxiliaire (7) est en connexion ouverte avec le lactoduc conerné (2), entre un gobelet trayeur (1) et les moyens de citernes à lait.

6. Dispositif selon la revendication 5, **caractérisé en ce que** le lactoduc concerné (2) comprend un élément de connexion (8) auquel sont connectées les extrémités interrompues du lactoduc (2), le côté inférieur dudit élément de connexion (8) étant pourvu d'une ouverture à laquelle est connectée le réservoir auxiliaire (7).

7. Dispositif selon la revendication 6, **caractérisé en ce que** les deux extrémités des lactoducs (2) sont reliées à l'élément de connexion (8) dans un plan sensiblement horizontal dans une position décalée opposée l'une par rapport à l'autre.

8. Dispositif selon l'une quelconque des revendications précédentes, **caractérisé en ce que** les moyens de fermeture (9) comprennent une soupape d'évacuation (12) qui ferme le réservoir auxiliaire (7) au moyen du vide présent dans le lactoduc (2).

9. Dispositif selon la revendication 8, **caractérisé en ce que** la soupape d'évacuation (12) libère l'ouverture d'écoulement de sortie du réservoir auxiliaire (7) lorsque, après la traite, le gobelet trayeur (1) entre en contact avec l'air extérieur, ou quand le gobelet trayeur (1) est compris dans un système de rinçage pour nettoyer seulement le gobelet trayeur (1) ou quand le gobelet trayeur (1) est compris dans un système de rinçage et que le rinçage du gobelet trayeur (1) et du système de lactoduc connecté à celui-ci est terminé.

10. Dispositif selon la revendication 8 ou 9, **caractérisé en ce que** la soupape d'évacuation (12) est constituée par une première rotule (13).

11. Dispositif selon l'une quelconque des revendications précédentes, **caractérisé en ce que** les moyens de fermeture supplémentaires (15) de l'ouverture d'entrée du réservoir auxiliaire (7) comprennent une soupape d'entrée (16) qui est conçue comme un flotteur.

12. Dispositif selon la revendication 11, **caractérisé en ce que** le flotteur est conçu en tant que seconde rotule (16).

13. Dispositif selon l'une quelconque des revendications 10 à 12, **caractérisé en ce que** le diamètre de la première rotule (13) est inférieur au diamètre de la seconde rotule (16).

14. Dispositif selon l'une quelconque des revendications 10 à 13, **caractérisé en ce que** les rotules (13 ;16) sont réalisées à partir d'une matière synthétique ou à partir de caoutchouc.

15. Dispositif selon l'une quelconque des revendications 1 à 10, **caractérisé en ce que** les moyens de fermeture supplémentaires (15) de l'ouverture d'entrée du réservoir auxiliaire (7) comprennent une soupape d'entrée qui est conçue comme une soupape de fermeture pouvant être commandée.

16. Dispositif selon la revendication 15, **caractérisé en ce que** la soupape de fermeture pouvant être commandée est appropriée pour fonctionner sous le contrôle d'un détecteur de niveau de lait, tels que par exemple un détecteur de conductivité ou un détecteur optique ou acoustique pour le lait.

17. Dispositif selon la revendication 16, **caractérisé en ce que** le détecteur est disposé dans le réservoir auxiliaire.

18. Dispositif selon l'une quelconque des revendications 1 à 9, ou 11 à 17, **caractérisé en ce que** la soupape de sortie des moyens de fermeture (9) de l'ouverture d'entrée du réservoir auxiliaire (7) est conçue comme une autre soupape de fermeture pouvant être commandée.

19. Dispositif selon la revendication 18, **caractérisé en ce que** l'autre soupape de fermeture pouvant être commandée est commandée par ordinateur.

20. Dispositif selon l'une quelconque des revendications précédentes, **caractérisé en ce que** le réservoir auxiliaire (7) possède une ouverture d'écoulement de sortie qui aboutit à l'intérieur d'un élément de récupération (10).

21. Dispositif selon la revendication 20, **caractérisé en ce que** le premier lait séparé au moyen du réservoir auxiliaire (7) et/ou, quand le gobelet trayeur concerné (1) est compris dans un système de rinçage, le liquide de rinçage déchargé via le réservoir auxiliaire (7), peuvent être acheminés vers un dispositif pour fournir du fourrage et/ou à boire à un animal.
